Europäisches Patentamt

European Patent Office

Office européen des brevets

Publication number: **0 286 209**

**A2**

# EUROPEAN PATENT APPLICATION

(21) Application number: 88301097.7

(22) Date of filing: **10.02.88**

(51) Int. Cl.⁴: **C04B 38/06 , //C04B33/00**

The title of the invention has been amended (Guidelines for Examination in the EPO, A-III, 7.3).

(30) Priority: **10.02.87 GB 8702944**

(43) Date of publication of application:
**12.10.88 Bulletin 88/41**

(84) Designated Contracting States:
**AT BE CH DE ES FR GB GR IT LI LU NL SE**

(71) Applicant: **LONDON BRICK COMPANY LIMITED**
**Stewartby**
**Bedford MK43(GB)**

(72) Inventor: **Bowler, Geoffrey Kenneth**
**Orchard Cottage Hartwell End**
**Hartwell Northants NN7 2EU(GB)**
Inventor: **Walters, David Terence**
**2 Cross Lane Aldwincle**
**Kettering Northants(GB)**

(74) Representative: **Lamb, John Baxter et al**
**MARKS & CLERK 57/60 Lincoln's Inn Fields**
**London WC2A 3LS(GB)**

(54) Process for the manufacture of frost-resistant porous clay bricks.

㊼ Bricks, having improved frost resistance, are manufactured by the steps of forming a plastic mass of clay, water and from 1 to 30% of volume, based on the total volume of the plastic mass, of a particulate solid combustible organic material, at least 50% by weight of which passes through a 600 μm sieve; forming the plastic mass into green bricks; and subsequently firing the green bricks to give fired bricks.

EP 0 286 209 A2

## BRICK MANUFACTURE

This invention is concerned with improvements in and relating to the manufacture of bricks and like fired clay products. For convenience, in the following description, the term "brick" will be used to denote not only bricks proper but other fired clay products for use in the building industry such as, for example, coping units roofing and facing tiles, pavers and screenwall units.

Bricks, whilst useful and widely used constructional materials, are not wholly without disadvantages. Thus, many bricks are not as frost-resistant as might be desired; that is the brick, when saturated with water, cannot withstand many freeze-thaw cycles. The physical properties of a brick depend, among other things, upon the clay from which it is made and, thus, bricks made of a particular clay may well have reduced frost-resistance properties as compared with bricks made from another clay, all other things being equal. Thus bricks, previously classified as of "Ordinary Quality" in B.S. 3921 but, since revision of the Standard in 1985, classed as "Moderately Frost Resistant", have marked limitations in use. This disadvantage can be overcome, to a large extent, by employing the brick in a situation in which frost-resistance is not essential, for example by employing the brick in a situation where it will not become saturated with water. However, it is clearly desirable, that a brick should be as frost-resistant as possible to widen its range of possible use.

It has now been found, in accordance with the present invention, that the frost-resistance of a brick can be improved by incorporating within the clay, from which the brick is formed, prior to firing of that clay, particulate combustible material which, it is believed, is burnt out during the course of firing to form a porous structure within the brick which structure serves to improve the frost-resistance characteristics of the brick.

According to the invention, therefore, there is provided a process for the manufacture of bricks which comprises the step of forming a plastic mass of clay, water and from 1 to 30% by volume, based on the total volume of the plastic mass, of a particulate solid combustible organic material; forming the plastic mass into green (unfired) bricks; and subsequently firing the green bricks to give fired bricks.

The basic process steps involved in the brickmaking process of the invention are conventional, that is the manufacture of a plastic clay/water mass, the formation of this mass into shaped green bricks and the subsequent firing of the green bricks are all well-known and well-established processes in the brickmaking art. The essential novel feature of the process of the invention is the requirement that the plastic clay mass shall contain particulate combustible material, of defined particle size characteristics, in defined amounts. As noted above, the particulate combustible material should be present in the plastic clay mass in an amount of from 1 to 30% by volume and it is preferably present in the mass in an amount of from 2 to 15% by volume, most preferably 2 to 8 % by volume. It should be noted that the term volume as used herein means true volume, that is the volume of the particulate organic material referred is its true volume not its apparent bulk volume. Since most combustible organic materials have a density in the range of about 0.9 to about 1.0 gm/ml, it may be said, alternatively, that the plastics clay mass should generally contain about 0.5 to about 15% by weight of combustible particulate material.

The combustible particulate organic material is suitably one having a particle size such that at least 50% by weight all of the material passes through a sieve of 600 $\mu$m mesh (i.e. so that the green brick material contains from 0.5 to 30% by volume, preferably 1 to 15% by volume, especially 1 to 4% by volume of particulate organic material passing through a 600 $\mu$m mesh sieve). Preferred suitable particle size characteristics for the combustible material are set out in the following Table.

### TABLE

### Preferred Particle Size Characteristics of

### Particulate Combustible Material

|  | %by wt through 600 µm mesh sieve | all through sieve of mesh size |
|---|---|---|
| Preferred | 50 - 90 | 3 mm |
| Most Preferred | 50 - 60 | 2 mm |

A wide variety of combustible organic materials may be used as particulate material in the invention provided that they may be subdivided into material of the desired particle size range. Examples of suitable materials include powdered or pulverized wood, straw, or plastics materials. Similarly, materials comprising both wood and plastics materials, e.g. powdered waste chipboard, may also be used.

As noted above, the basic operating steps used in the process of the invention are well known and will generally be carried out using apparatus or plant well-known or well-established in the brickmaking art. Thus, for example, the plastic clay/water/particulate material mass may be formed in conventional apparatus such as shaft mixers.

The particulate material may be added to the clay/water mixture before it is processed into a plastic mass, during the course of such processing or after the processing, provided that clay/water and particulate material are adequately mixed to ensure good dispersion of the particulate material within the plastic clay/water mass. It may be noted, in this connection, that the clay and water should be formed into a plastic mass.

The plastic clay/water/particulate material mass is subsequently formed into green bricks and this may be effected, for example, by a so-called extrusion process or by a moulding operation (as in the so-called "wet mud" process). The green bricks are subsequently fired, generally after a drying step which may be carried out in the same kiln as the firing or in a separate drying installation. Firing of the bricks carried out in a conventional manner. Firing should be sufficient to ensure that substantially all of the particulate combustible material is burnt out from the brick during the course of firing. The firing is conventionally carried in known kilns such as chamber, Hoffmann or tunnel kilns.

In order that the invention may be well understood the following Example is given by way of illustration only.

### EXAMPLE

A plastic clay/water/combustible organic material mixture, containing about 20% by weight of water based on the clay and about 5% by volume of combustible organic material, based on the total volume of the plastic mixture, was prepared. The clay was Lower Oxford clay and the combustible organic material was wood dust having a particle size such that all passed through a sieve of 3 mm mesh size and more than 50% passed through a sieve of 600 µm mesh size.

The plastic mixture was extruded into green bricks which were then dried and fired in a Hoffman kiln.

The resulting bricks met the requirement for classification as "Frost Resistant" under B.S. 3921 and could withstand more than 100 freeze-thaw cycles in a thaw test cabinet derived by British Cermaics Research Ltd (see Br. Ceramic Trans J., 83, 1984, pp 112-115).

By contrast ordinary "Fletton" bricks manufactured from the same clay were only "Moderately Frost Resistant" as defined in BS 3921.

## Claims

1. A process for the manufacture of bricks having improved frost resistance which comprises the steps of forming a plastic mass of clay, water and from 1 to 30% by volume, based on the total volume of the plastic mass, of a particulate solid combustible organic material, at least 50% by weight of which passes through a sieve of 600 μm; forming the plastic mass into green bricks; and subsequently firing the green bricks to give fired bricks.

2. A process as claimed in claim 1 in which the combustible particulate organic material has a particle size such that all of the material passes through a sieve having a mesh of 3 mm.

3. A process as claimed in claim 2 in which the combustible particulate organic material has a particle size such that all of the material passes through a sieve having a mesh of 2 mm.

4. A process as claimed in any one of the preceding claims in which the combustible particulate organic material is used in an amount of from 2 to 15% by volume, based on the total volume of the pastic mass.

5. A process as claimed in claim 4 in which the combustible particulate organic material is used in an amount of from 2 to 8% by volume, based on the total volume of the plastic mass.